# EUROPEAN PATENT APPLICATION

(11) **EP 4 379 835 A1**
(43) Date of publication of application: **05.06.2024**
(21) Application number: 22849229.4
(22) Date of filing: 11.07.2022
(51) Int. Cl.: H01M 4/13, H01M 4/139, H01M 10/058, H01M 50/403, H01M 50/443, H01M 50/46

(54) **MULTILAYER BODY FOR NONAQUEOUS SECONDARY BATTERIES, METHOD FOR PRODUCING MULTILAYER BODY FOR NONAQUEOUS SECONDARY BATTERIES, AND NONAQUEOUS SECONDARY BATTERY**

(30) Priority: 30.07.2021 JP 2021126234
(71) Applicant: Zeon Corporation, Tokyo 100-8246 (JP)
(72) Inventor: TAKAGI, Kazuki, Tokyo 100-8246 (JP); UMESATO, Toshiyuki, Tokyo 100-8246 (JP)
(74) Representative: Maiwald GmbH
(86) International application number: PCT/JP2022/027285
(87) International publication number: WO 2023/008165

(57) **Abstract**

Disclosed is a laminate for non-aqueous secondary battery that has excellent adhesiveness and can allow a non-aqueous secondary battery to exert excellent output characteristics. The laminate for non-aqueous secondary battery includes at least an electrode and an adhesive layer disposed on the electrode. The adhesive layer is a dried product of a composition for adhesive layer containing at least a particulate polymer A, and the composition for adhesive layer has a particle diameter (D10) at which a cumulative volume calculated from a small diameter end of a volume-basis particle diameter distribution reaches 10%, which is larger than a surface roughness (Sa) of the electrode.

## Description

### TECHNICAL FIELD

This disclosure relates to a laminate for non-aqueous secondary battery, a method of producing a laminate for non-aqueous secondary battery, and a non-aqueous secondary battery.

### BACKGROUND

Non-aqueous secondary batteries (hereinafter, also referred to as "secondary batteries") such as lithium ion secondary batteries have characteristics such as compact size, light weight, high energy-density, and the ability to be repeatedly charged and discharged, and are used in a wide variety of applications. A secondary battery generally includes battery members, such as a positive electrode, a negative electrode, and a separator that separates the positive and negative electrodes from each other to prevent a short circuit between the positive and negative electrodes.

In production of such a secondary battery, bonding battery members of the secondary battery, e.g., an electrode and a separator to form a laminate for non-aqueous secondary battery (hereinafter, also referred to as "laminate for secondary battery") is conventionally performed. For example, Patent Literature (PTL) 1 describes supplying a slurry containing a predetermined particulate polymer and a binder, which prevents the particulate polymer from dropping from a battery member, to a surface of the battery member by an inkjet method to form an adhesive material, and bonding battery members via the adhesive material to obtain a laminate for secondary battery.

### CITATION LIST

### Patent Literature

PTL 1: WO2019221056A

### SUMMARY

### (Technical Problem)

However, according to the laminate for secondary battery described in PTL 1, parts of the particulate polymer and the binder penetrate into the battery member, and thus dropping of the particulate polymer from the battery member is not sufficiently inhibited. In addition, the particulate polymer penetrates into the battery member, which makes it difficult to sufficiently ensure the amount of the particulate polymer on the battery member to cause adhesion failure of the adhesive material. Moreover, the binder that has penetrated into the battery member inhibits the flow of metallic ions such as lithium (Li) ions, which increases the battery resistance in a secondary battery including the laminate for secondary battery described in PTL 1.

It could be helpful to provide a laminate for non-aqueous secondary battery, which has excellent adhesiveness and can allow a non-aqueous secondary battery to exert excellent output characteristics.

It could be also helpful to provide a method of efficiently producing a laminate for non-aqueous secondary battery, which has excellent adhesiveness and can allow a non-aqueous secondary battery to exert excellent output characteristics.

It could be further helpful to provide a secondary battery, which has excellent battery characteristics such as output characteristics.

### (Solution to Problem)

The inventors conducted diligent investigation to solve the problems set forth above. The inventors discovered that a laminate for secondary battery, in which an adhesive layer is disposed on an electrode, a composition for adhesive layer, which forms the adhesive layer, contains a predetermined particulate polymer, and the composition for adhesive layer and a surface roughness of the electrode satisfy a predetermined relation, can exert excellent adhesiveness, and using the laminate for secondary battery can allow a secondary battery to exert excellent output characteristics. In this manner, the inventors completed the present disclosure.

Specifically, the present disclosure aims to advantageously solve the problems set forth above, and thus laminates for non-aqueous secondary battery as described in followings (1) to (4), a method of producing a laminate for non-aqueous secondary battery as described in following (5), and a non-aqueous secondary battery as described in following (6) are provided.
(1) A laminate for non-aqueous secondary battery, comprising at least an electrode and an adhesive layer disposed on the electrode, wherein the adhesive layer is a dried product of a composition for adhesive layer containing at least a particulate polymer A, and the composition for adhesive layer has a particle diameter (D10) at which a cumulative volume calculated from a small diameter end of a volume-basis particle diameter distribution reaches 10%, the particle diameter (D10) being larger than a surface roughness (Sa) of the electrode.

When a particle diameter (D10) at which a cumulative volume calculated from a small diameter end of a volume-basis particle diameter distribution of a composition for adhesive layer that forms an adhesive layer disposed on an electrode reaches 10% and a surface roughness of the electrode satisfy a predetermined relation in this manner, penetration of the particulate polymer A into the electrode is suppressed, and the flow of metallic ions is not inhibited in the laminate for secondary battery. Therefore, using such a laminate for secondary battery can allow a secondary battery to exert excellent output characteristics.

Note that, in the present disclosure, "particle diameter (D10) at which a cumulative volume calculated from a small diameter end of a volume-basis particle diameter distribution reaches 10%" and "surface roughness (Sa) of the electrode" of the composition for adhesive layer can be determined in accordance with a method described in the EXAMPLES section of the present description.

(2) The laminate for non-aqueous secondary battery according to (1) above, wherein a mass proportion constituted by a polymer having a glass-transition temperature (Tg) of 0°C or less is the highest in all polymers that form the particulate polymer A.

When a particulate polymer A in which a proportion constituted by a polymer having a glass-transition temperature (Tg) of 0°C or less is the highest in all polymers that form the particulate polymer A is used in this manner, dropping of the particulate polymer A from the electrode is further inhibited, and it is possible to further strongly bond the electrode and a separator via the adhesive layer when they are pressurized at normal temperature.

(3) The laminate for non-aqueous secondary battery according to (1) or (2) above, wherein the particulate polymer A has a core-shell structure including a core portion and a shell portion that covers an outer surface of the core portion.

The use of the particulate polymer A having a core-shell structure in this manner facilitates control of the pressure sensitivity of the adhesive force of the adhesive layer.

(4) The laminate for non-aqueous secondary battery according to (3) above, wherein the shell portion has a polymer having a glass-transition temperature (Tg) exceeding 50°C.

A particulate polymer A in which the shell portion has a polymer having a glass-transition temperature (Tg) exceeding 50°C is used in this manner, it is possible to improve the discharge characteristics of the composition for adhesive layer when the adhesive layer is formed using an inkjet method.

(5) A method of producing the laminate for secondary battery according to any one of (1) to (4) above, the method comprising forming the adhesive layer using an inkjet method.

When the adhesive layer is formed using the inkjet method in this manner, it is possible to increase the production efficiency of the laminate for secondary battery.

(6) A non-aqueous secondary battery, comprising the laminate for non-aqueous secondary battery according to any one of (1) to (4) above.

The non-aqueous secondary battery of the present disclosure includes the above-described laminate for secondary battery in this manner, and thus has excellent battery characteristics such as output characteristics.

### (Advantageous Effect)

According to the present disclosure, it is possible to provide a laminate for non-aqueous secondary battery, which has excellent adhesiveness and can allow a non-aqueous secondary battery to exert excellent output characteristics.

According to the present disclosure, it is also possible to provide a method of efficiently producing a laminate for non-aqueous secondary battery, which has excellent adhesiveness and can allow a non-aqueous secondary battery to exert excellent output characteristics.

According to the present disclosure, it is further possible to provide a secondary battery having excellent battery characteristics such as output characteristics.

### BRIEF DESCRIPTION OF THE DRAWINGS

In the accompanying drawings:

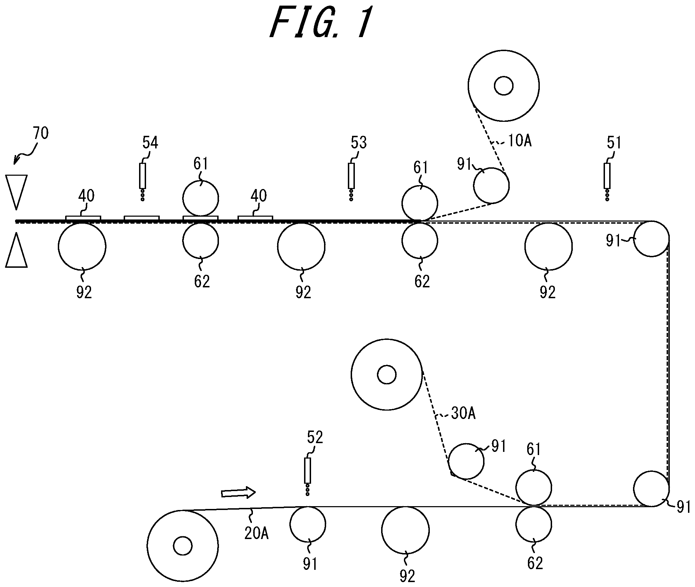

FIG. 1 is a drawing illustrating a production process of a laminate for non-aqueous secondary battery in each of Examples and Comparative Examples.

### DETAILED DESCRIPTION

The following provides a detailed description of embodiments of the present disclosure.

A laminate for non-aqueous secondary battery of the present disclosure can be used, for example, in production of a non-aqueous secondary battery such as a lithium ion secondary battery. The laminate for non-aqueous secondary battery of the present disclosure can be efficiently produced by a method of producing a laminate for non-aqueous secondary battery of the present disclosure. A non-aqueous secondary battery of the present disclosure includes the laminate for non-aqueous secondary battery of the present disclosure.

### (Laminate for non-aqueous secondary battery)

The laminate for secondary battery of the present disclosure includes at least an electrode and an adhesive layer disposed on the electrode, and optionally may include other battery members (hereinafter, also simply referred to as "other battery members") such as a separator bonded to the electrode via the adhesive layer. The adhesive layer is a dried product of a composition for adhesive layer containing at least a particulate polymer A. The composition for adhesive layer has a particle diameter (D10) at which a cumulative volume calculated from a small diameter end of a volume-basis particle diameter distribution reaches 10% (hereinafter, also referred to as "volume-average particle diameter (D10) of the composition for adhesive layer"), which is larger than a surface roughness (Sa) of the electrode.

### <Electrode>

The electrode that forms a laminate for secondary battery may be a positive electrode or a negative electrode. The electrode can be, for example, an electrode formed of an electrode substrate including an electrode mixed material layer formed at one side or both sides of a current collector or an electrode further including a porous membrane layer formed on an electrode mixed material layer of an electrode substrate.

The current collector, electrode mixed material layer, and porous membrane layer are not particularly limited and can be any current collector, electrode mixed material layer, and porous membrane layer that can be used in the field of secondary batteries, such as any of those described in JP2013-145763A, for example. The porous membrane layer is a layer containing nonconductive particles such as described in JP2013-145763A, for example.

The surface roughness (Sa) of the electrode is preferably 100 nm or more, and preferably 300 nm or more, and preferably 1000 nm or less, more preferably 700 nm or less, and further preferably 500 nm or less. With the surface roughness of the electrode being equal to or greater than the aforementioned lower limit, it is possible to further enhance the output characteristics of the secondary battery. With the surface roughness (Sa) of the electrode being equal to or lower than the aforementioned upper limit, it is possible to further suppress the penetration of the particulate polymer A into the electrode.

Note that the surface roughness (Sa) of the electrode can be adjusted mainly by control of the surface roughness of a roll during pressing or the density after pressing of the electrode.

### <Adhesive layer>

The adhesive layer that forms a laminate for secondary battery is a material that is disposed on the electrode and bonds the electrode that forms the laminate for secondary battery to other battery members. The adhesive layer is a dried product of a composition for adhesive layer containing at least a particulate polymer A. The particulate polymer A is in a particulate form in the composition for adhesive layer. However, the particulate polymer A may be in a particulate form or in any other form in the adhesive layer.

### <Composition for adhesive layer>

The composition for adhesive layer is a material that forms an adhesive layer, contains the particulate polymer A, and optionally may further contain solid contents other than the particulate polymer A. The composition for adhesive layer is normally a slurry composition obtained by dispersing the particulate polymer A in a solvent.

The volume-average particle diameter (D10) of the composition for adhesive layer is preferably 500 nm or more, preferably 550 nm or more, and preferably 600 nm or more. The volume-average particle diameter (D 10) of the composition for adhesive layer is not particularly limited but is normally 1000 nm or less.

The volume-average particle diameter (D50) of the composition for adhesive layer is preferably 600 nm or more, more preferably 650 nm or more, and further preferably 700 nm or more, and preferably 1400 nm or less, more preferably 1300 nm or less, and further preferably 1200 nm or less.

Note that the volume-average particle diameter (D50) of the composition for adhesive layer can be measured in accordance with a method described in the EXAMPLES section of the present specification.

### <Particulate polymer A>

The particulate polymer A is a component that functions as a binder in the adhesive layer. The particulate polymer A has the particle diameter (D10) at which a cumulative volume calculated from a small diameter end of a volume-basis particle diameter distribution reaches 10% (hereinafter, also referred to as "volume-average particle diameter (D10) of the particulate polymer A"), which is preferably larger than the aforementioned surface roughness (Sa) of the electrode.

Specifically, the volume-average particle diameter (D10) of the particulate polymer A is preferably 400 nm or more, more preferably 500 nm or more, and further preferably 600 nm or more. With the particle diameter (D10) of the particulate polymer A being equal to or greater than the aforementioned lower limit, it is possible to further enhance the adhesiveness of the adhesive layer. The volume-average particle diameter (D10) of the particulate polymer A is not particularly limited but is normally 1000 nm or less.

Note that the volume-average particle diameter (D10) of the particulate polymer A can be adjusted by, for example, changing the type or proportion of an emulsifier used for preparing the particulate polymer A.

From the perspective of further suppressing dropping of the particulate polymer A from the electrode, it is preferable that, in the particulate polymer A, a mass proportion constituted by a polymer having a glass-transition temperature (Tg) of 0°C or less is the highest in all polymers that form the particulate polymer A. Specifically, the proportion constituted by a polymer having a glass-transition temperature (Tg) of 0°C or less is preferably 80 mass% or more, preferably 90 mass% or more, and preferably 98 mass% or less, in all polymers that form the particulate polymer A. With the mass proportion constituted by a polymer having a glass-transition temperature (Tg) of 0°C or less being equal to or greater than the aforementioned lower limit in all polymers that form the particulate polymer A, the dropping of the particulate polymer A from the electrode is further suppressed. In addition, it is possible to further strongly bond the electrode and the separator via the adhesive layer when they are pressurized at normal temperature. With the mass proportion constituted by a polymer having a glass-transition temperature (Tg) of 0°C or less being equal to or lower than the aforementioned upper limit, it is possible to more improve inkjet discharge characteristics when the composition for adhesive layer is supplied using an inkjet method.

The particulate polymer A may be any of a particulate polymer A having a core-shell structure and a particulate polymer A not having a core-shell structure but is preferably a particulate polymer A having a core-shell structure.

### «Particulate polymer A having core-shell structure»

The particulate polymer A having a core-shell structure has a core-shell structure including a core portion and a shell portion that covers an outer surface of the core portion. The use of the particulate polymer A having a core-shell structure facilitates control of the pressure sensitivity of the adhesive force of the adhesive layer.

The shell portion may entirely cover the outer surface of the core portion or may partially cover the outer surface of the core portion. In terms of external appearance, even in a situation in which the outer surface of the core portion appears to be completely covered by the shell portion, the shell portion is still considered to be a shell portion that partially covers the outer surface of the core portion so long as pores are formed that pass between inside and outside of the shell portion. Therefore, for example, a particulate polymer A including a shell portion having fine pores that pass from the outer surface of the shell portion (i.e., the peripheral surface of the particulate polymer A) to the outer surface of the core portion corresponds to a particulate polymer in which the shell portion partially covers the outer surface of the core portion.

Note that the particulate polymer A may include any constituent elements other than the core portion and the shell portion described above so long as the expected effects are not significantly lost as a result. Specifically, the particulate polymer A may, for example, include a portion inside of the core portion, which is formed of a different polymer from the core portion. In one specific example, a residual seed particle may be present inside of the core portion in a situation in which seed particles are used in production of the particulate polymer A by seeded polymerization. However, from a viewpoint of more noticeably displaying the expected effects, it is preferable that the particulate polymer A is composed of only the core portion and the shell portion.

### [Core portion]

### -Glass-transition temperature (Tg)-

The glass-transition temperature (Tg) of the polymer of the core portion in the particulate polymer A is preferably 25°C or less, more preferably 10°C or less, and further preferably 0°C or less, and preferably -50°C or more. With the glass-transition temperature of the polymer of the core portion being equal to or lower than the aforementioned upper limit, the polymer of the core portion can exert good adhesiveness, and it is possible to strongly bond the electrode to other battery members via the adhesive layer even by pressurization at normal temperature. With the glass-transition temperature of the polymer of the core portion being equal to or greater than the aforementioned lower limit, it is possible to improve the inkjet discharge characteristics.

Note that the glass-transition temperature of the polymer of the core portion can be adjusted by, for example, changing the type or proportion of a monomer used for preparing the polymer of the core portion.

### -Composition-

Examples of monomers used for preparation of the polymer of the core portion include a vinyl chloride monomer such as vinyl chloride and vinylidene chloride; a vinyl acetate monomer such as vinyl acetate; an aromatic vinyl monomer such as styrene, α-methyl styrene, styrene sulfonic acid, butoxystyrene, and vinylnaphthalene; a vinylamine monomer such as vinylamine; a vinylamide monomer such as N-vinylformamide and N-vinylacetamide; a non-fluorine-containing (meth)acrylic acid ester monomer such as methyl acrylate, ethyl acrylate, butyl acrylate, 2-ethylhexyl acrylate, methyl methacrylate, ethyl methacrylate, butyl methacrylate, and cyclohexyl methacrylate; a (meth)acrylamide monomer such as acrylamide and methacrylamide; a (meth)acrylonitrile monomer such as acrylonitrile and methacrylonitrile; a fluorine-containing (meth)acrylic acid ester monomer such as 2-(perfluorohexyl)ethyl methacrylate and 2-(perfluorobutyl)ethyl acrylate; maleimide; and a maleimide derivative such as phenylmaleimide. One of these monomers may be used individually, or two or more of these monomers may be used in combination in a freely selected ratio.

Note that in the present disclosure, "(meth)acryl" is used to indicate "acryl" and/or "methacryl", and "(meth)acrylonitrile" is used to indicate "acrylonitrile" and/or "methacrylonitrile".

Of these monomers, as a monomer used for preparation of the polymer of the core portion, from the perspective of providing further strong bonding between the electrode and other battery members via the adhesive layer, it is preferable to use at least a (meth)acrylic acid ester monomer, and combined use of a (meth)acrylic acid ester monomer and an aromatic vinyl monomer or combined use of a (meth)acrylic acid ester monomer and a (meth)acrylonitrile monomer is more preferable. That is, the polymer of the core portion preferably includes at least a (meth)acrylic acid ester monomer unit, and more preferably includes a (meth)acrylic acid ester monomer unit, as well as an aromatic vinyl monomer unit or a (meth)acrylonitrile monomer unit.

Note that the phrase "includes a monomer unit" as used in the present disclosure means that "a polymer obtained using the monomer includes a repeating unit derived from the monomer".

Moreover, the term "(meth)acrylic acid ester monomer" as used in the present disclosure refers to a monofunctional (meth)acrylic acid ester monomer having only one polymerizable reactive group.

The proportion of the (meth)acrylic acid ester monomer unit in the polymer of the core portion is preferably 5 mass% or more, more preferably 10 mass% or more, and particularly preferably 20 mass% or more, and preferably 98 mass% or less, and more preferably 96 mass% or less, when all repeating units (all monomer units) in the particulate polymer A is taken to be 100 mass%, from the perspective of providing further strong bonding between the electrode and other battery members via the adhesive layer.

Moreover, when the polymer of the core portion includes a (meth)acrylic acid ester monomer unit and an aromatic vinyl monomer unit, the proportion of the aromatic vinyl monomer unit in the polymer of the core portion is preferably 15 mass% or more, more preferably 20 mass% or more, and particularly preferably 25 mass% or more, and preferably 95 mass% or less, more preferably 80 mass% or less, and particularly preferably 70 mass% or less, when all repeating units (all monomer units) in the particulate polymer A is taken to be 100 mass%, from the perspective of providing further strong bonding between the electrode and other battery members via the adhesive layer.

Furthermore, when the polymer of the core portion includes a (meth)acrylic acid ester monomer unit and a (meth)acrylonitrile monomer unit, the proportion of the (meth)acrylonitrile monomer unit in the polymer of the core portion is preferably 1 mass% or more, and more preferably 1.5 mass% or more, and preferably 10 mass% or less, and more preferably 5 mass% or less, when all repeating units (all monomer units) in the particulate polymer A is taken to be 100 mass%, from the perspective of providing further strong bonding between the electrode and other battery members via the adhesive layer.

The polymer of the core portion may include an acid group-containing monomer unit. Examples of acid group-containing monomers, which may form the acid group-containing monomer unit, include monomers having an acid group, such as carboxy group-containing monomers, sulfo group-containing monomers, and phosphate group-containing monomers.

Moreover, examples of carboxy group-containing monomers include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Examples of sulfo group-containing monomers include vinyl sulfonic acid, methyl vinyl sulfonic acid, (meth)allyl sulfonic acid, (meth)acrylic acid-2-sulfoethyl, 2-acrylamido-2-methylpropane sulfonic acid, and 3-allyloxy-2-hydroxypropane sulfonic acid.

Examples of phosphate group-containing monomers include 2-(meth)acryloyloxy ethyl phosphate, methyl-2-(meth)acryloyloxy ethyl phosphate, and ethyl-(meth)acryloyloxyethyl phosphate.

Note that in the present disclosure, "(meth)allyl" is used to indicate "allyl" and/or "methallyl", and "(meth)acryloyl" is used to indicate "acryloyl" and/or "methacryloyl".

Of these acid group-containing monomers, carboxy group-containing monomers are preferable, of which, monocarboxylic acids are preferable, and (meth)acrylic acid is more preferable.

One of these acid group-containing monomers may be used individually, or two or more of these acid group-containing monomers may be used in combination in a freely selected ratio.

The proportion of the acid group-containing monomer unit in the polymer of the core portion is preferably 0.1 mass% or more, and more preferably 1 mass% or more, and preferably 15 mass% or less, and more preferably 10 mass% or less, when all repeating units (all monomer units) in the particulate polymer A is taken to be 100 mass%. By setting the proportion of the acid group-containing monomer unit within any of the ranges set forth above, it is possible to increase dispersibility of the polymer of the core portion and facilitate formation of a shell portion partially covering the outer surface of the core portion on the outer surface of the polymer of the core portion, during preparation of the particulate polymer A.

Moreover, the polymer of the core portion preferably includes a cross-linkable monomer unit in addition to the monomer units described above. A cross-linkable monomer, which may form the cross-linkable monomer unit, is a monomer that may form a cross-linked structure during or after polymerization by heating or by irradiation with energy rays.

Examples of cross-linkable monomers include polyfunctional monomers having two or more polymerizable reactive groups in the monomer. Examples of polyfunctional monomers include a divinyl monomer such as divinyl benzene, 1,3-butadiene, isoprene, and allyl methacrylate; a di(meth)acrylic acid ester monomer such as ethylene dimethacrylate, diethylene glycol dimethacrylate, ethylene glycol dimethacrylate, diethylene glycol diacrylate, and 1,3-butylene glycol diacrylate; a tri(meth)acrylic acid ester monomer such as trimethylolpropane trimethacrylate and trimethylolpropane triacrylate; an epoxy group-containing ethylenically unsaturated monomer such as allyl glycidyl ether and glycidyl methacrylate; and γ-methacryloxypropyltrimethoxysilane. Of these polyfunctional monomers, a di(meth)acrylic acid ester monomer is more preferable. One of these polyfunctional monomers may be used individually, or two or more of these polyfunctional monomers may be used in combination in a freely selected ratio.

The proportion of the cross-linkable monomer unit in the polymer of the core portion is preferably 0.1 mass% or more, more preferably 0.2 mass% or more, and particularly preferably 0.4 mass% or more, and preferably 10 mass% or less, more preferably 5 mass% or less, and particularly preferably 3 mass% or less, when all repeating units (all monomer units) in the particulate polymer A is taken to be 100 mass%. By setting the proportion of the cross-linkable monomer unit within any of the ranges set forth above, it is possible to further strongly bond the electrode to other battery members via the adhesive layer.

### [Shell portion]

### -Glass-transition temperature-

The glass-transition temperature of the polymer of the shell portion in the particulate polymer A is preferably 30°C or more, more preferably 35°C or more, and further preferably 40°C or more, and preferably 200°C or less, and more preferably 120°C or less. With the glass-transition temperature of the polymer of the shell portion being equal to or greater than the aforementioned lower limit, it is possible to further improve the inkjet discharge characteristics when the composition for adhesive layer is supplied using the inkjet method. With the glass-transition temperature of the polymer of the shell portion being equal to or lower than the aforementioned upper limit, it is possible to further strongly bond the electrode to other battery members via the adhesive layer at normal temperature because the particulate polymer A is moderately soft.

The glass-transition temperature of the polymer of the shell portion can be adjusted by, for example, changing the type or proportion of the monomer used for preparation of the polymer of the shell portion.

The glass-transition temperature of the polymer of the shell portion is preferably at least 25°C higher than aforementioned glass-transition temperature of the polymer of the core portion, from the perspective of holding the shape of the particulate polymer A after the bonding between the electrode and other battery members to suppress an increase in resistance.

### -Composition-

Examples of monomers used for preparing the polymer of the shell portion include monomers similar to those exemplified above as monomers used for producing the polymer of the core portion. One of these monomers may be used individually, or two or more of these monomers may be used in combination in a freely selected ratio.

Of these monomers, from the perspective of providing further strong bonding between the electrode and other battery members via the adhesive layer, it is preferable to use at least any one of a (meth)acrylic acid ester monomer, an aromatic vinyl monomer, and an acid group-containing monomer, as a monomer used for preparation of the polymer of the shell portion. That is, the polymer of the shell portion preferably includes at least any one of a (meth)acrylic acid ester monomer unit, an aromatic vinyl monomer unit, and an acid group-containing monomer.

The proportion of the (meth)acrylic acid ester monomer unit in the polymer of the shell portion is preferably 1 mass% or more, and more preferably 1.5 mass% or more, and preferably 10 mass% or less, and more preferably 6 mass% or less, when all repeating units (all monomer units) in the particulate polymer A is taken to be 100 mass%, from the perspective of providing even further strong bonding between the electrode and other battery members via the adhesive layer.

The proportion of the aromatic vinyl monomer unit in the polymer of the shell portion is preferably 2 mass% or more, and more preferably 3 mass% or more, and preferably 10 mass% or less, and more preferably 5 mass% or less, when all repeating units (all monomer units) in the particulate polymer A is taken to be 100 mass%, from the perspective of providing even further strong bonding between the electrode and other battery members via the adhesive layer.

### [Mass proportion of shell portion among total of core portion and shell portion]

In the particulate polymer A having a core-shell structure, the mass proportion of the shell portion among the total of the core portion and the shell portion is preferably 2 mass% or more, and preferably 15 mass% or less, and more preferably 10 mass% or less. With the mass proportion of the shell portion being equal to or greater than the aforementioned lower limit, it is possible to further improve the inkjet discharge characteristics when the composition for adhesive layer is applied using the inkjet method. With the mass proportion of the shell portion being equal to or lower than the aforementioned upper limit, it is possible to further strongly bond the electrode and other battery members by pressurization at normal temperature and allow a secondary battery to exert further excellent battery characteristics.

The mass proportion of the shell portion among the total of the core portion and the shell portion is determined by the ratio of thickness of the core portion and the shell portion, which is described below, and the specific gravity of the particulate polymer A.

### [Volume-average particle diameter of particulate polymer A having core-shell structure]

The volume-average particle diameter (D50) of the particulate polymer A having a core-shell structure is preferably 400 nm or more, and preferably 1500 nm or less. With the volume-average particle diameter of the particulate polymer A having a core-shell structure being equal to or greater than the aforementioned lower limit, it is possible to suppress the deterioration of battery characteristics by the resistance increase of a secondary battery due to the blocking of the passing route of lithium ions of the particulate polymer A. With the volume-average particle diameter being equal to or lower than the aforementioned upper limit, it is possible to further suppress the clogging of a nozzle when the composition for adhesive layer is applied by the inkjet method to improve the inkjet discharge characteristics.

Note that the volume-average particle diameter (D50) of the particulate polymer A having a core-shell structure can be measured using a method described in the EXAMPLES section of the present specification.

The volume-average particle diameter of the particulate polymer A having a core-shell structure can be adjusted into a desired range by, for example, adjusting the amount of the emulsifier or the amount of the monomer when the core portion and/or the shell portion in the particulate polymer A are prepared.

### [Ratio of average thickness of shell portion to volume-average particle diameter (D50)]

The ratio of the average thickness of the shell portion to the volume-average particle diameter (D50) of the particulate polymer A having a core-shell structure is preferably 0.1% or more, and more preferably 0.5% or more, and preferably 15% or less, and more preferably 10% or less. With the average thickness of the shell portion being equal to or greater than the aforementioned lower limit, it is possible to further improve the inkjet discharge characteristics when the composition for adhesive layer is applied using the inkjet method. With the average thickness of the shell portion being equal to or lower than the aforementioned upper limit, it is possible to further strongly bond the electrode to other battery members via the adhesive layer when they are pressurized at normal temperature.

The average thickness of the shell portion in the particulate polymer A having a core-shell structure is determined by observing a cross-sectional structure of the particulate polymer A having a core-shell structure, using a transmission electron microscope (TEM). Specifically, the maximum thickness of the shell portion in the cross-sectional structure of the particulate polymer A is measured using the TEM. 20 or more randomly-selected particles of the particulate polymer A are measured for their maximum thickness of the shell portion, and an average of the measured maximum thicknesses is recorded as an average thickness of the shell portion. However, in the case that the shell portion is formed of polymer particles and these polymer particles are arranged in a monolayer without being stacked on top of each other in the radial direction of the particles of the particulate polymer A, the number average particle diameter of the particles forming the shell portion is recorded as an average thickness of the shell portion.

### [Method of preparing particulate polymer A having core-shell structure]

The particulate polymer A having a core-shell structure set forth above can be prepared by, for example, performing stepwise polymerization using the monomer that forms the polymer of the core portion and the monomer that forms the polymer of the shell portion and changing the ratio of these monomers over time. Specifically, the particulate polymer A can be prepared by continuous, multi-step emulsion polymerization or multi-step suspension polymerization in which a polymer of a preceding step is then covered by a polymer of a succeeding step.

The following describes one example of a case in which the particulate polymer A having a core-shell structure set forth above is obtained by multi-step emulsion polymerization.

In the polymerization, an anionic surfactant such as sodium dodecylbenzenesulfonate or sodium dodecyl sulfate, a nonionic surfactant such as polyoxyethylene nonylphenyl ether or sorbitan monolaurate, or a cationic surfactant such as octadecylamine acetate can be used as an emulsifier in accordance with a standard method. Moreover, a peroxide such as t-butyl peroxy-2-ethylhexanoate, potassium persulfate, or cumene peroxide, or an azo compound such as 2,2'-azobis(2-methyl-N-(2-hydroxyethyl)-propionamide) or 2,2'-azobis(2-amidinopropane) hydrochloride can be used as a polymerization initiator, for example.

The polymerization procedure involves initially mixing monomers for forming the core portion and the emulsifier, and performing emulsion polymerization as one batch to obtain a particulate polymer that forms the core portion. The particulate polymer A having a core-shell structure set forth above can then be obtained by performing polymerization of monomers for forming the shell portion in the presence of the particulate polymer forming the core portion.

In this polymerization, it is preferable that the monomers for forming the polymer of the shell portion are supplied into the polymerization system continuously or divided into a plurality of portions when preparing the particulate polymer A that partially covers the outer surface of the core portion with the shell portion. As a result of the monomers for forming the polymer of the shell portion being supplied into the polymerization system in portions or continuously, the polymer forming the shell portion can be formed as particles that bond to the core portion such as to form a shell portion that partially covers the core portion.

### «Particulate polymer A not having core-shell structure»

### -Glass-transition temperature (Tg)-

The glass-transition temperature of the particulate polymer A not having a core-shell structure is preferably 25°C or less, more preferably 10°C or less, and further preferably 0°C or less. When the glass-transition temperature of the particulate polymer A not having a core-shell structure is 25°C or less, it is possible to further suppress dropping of the particulate polymer A from the electrode.

### -Composition-

Monomers used for preparation of the particulate polymer A not having a core-shell structure include the same monomers as those exemplified above as monomers which may be used for production of the polymer of the core portion in the particulate polymer A having a core-shell structure set forth above. Examples of the monomers used for preparation of the particulate polymer A not having a core-shell structure is preferably a (meth)acrylic acid ester monomer, a (meth)acrylonitrile monomer, an acid group-containing monomer, and a cross-linkable monomer. One of these monomers may be used individually, or two or more of these monomers may be used in combination in a freely selected ratio.

The proportion of the (meth)acrylic acid ester monomer unit in the particulate polymer A not having a core-shell structure is preferably 40 mass% or more, more preferably 50 mass% or more, and further preferably 60 mass% or more, and preferably 98 mass% or less, and more preferably 95 mass% or less, when all repeating units (all monomer units) included in the polymer is taken to be 100 mass%, from the perspective of providing further strong bonding between the electrode and other battery members via the adhesive layer.

The proportion of the (meth)acrylonitrile monomer unit in the particulate polymer A not having a core-shell structure is preferably 0.5 mass% or more, more preferably 1 mass% or more, and further preferably 1.5 mass% or more, and preferably 5 mass% or less, more preferably 4 mass% or less, and further preferably 3 mass% or less, when all repeating units (all monomer units) included in the polymer is taken to be 100 mass%, from the perspective of providing further strong bonding between the electrode and other battery members via the adhesive layer.

The proportion of the acid group-containing monomer unit in the particulate polymer A not having a core-shell structure is preferably 0.5 mass% or more, more preferably 1 mass% or more, and further preferably 2 mass% or more, and preferably 10 mass% or less, more preferably 7 mass% or less, and further preferably 5 mass% or less, when all repeating units (all monomer units) included in the polymer is taken to be 100 mass%. By setting the proportion of the acid group-containing monomer unit in the particulate polymer A not having a core-shell structure within any of the ranges set forth above, it is possible to increase the dispersibility of the particulate polymer A.

The proportion of the cross-linkable monomer unit in the particulate polymer A not having a core-shell structure is preferably 0.1 mass% or more, and preferably 5 mass% or less, more preferably 4 mass% or less, and further preferably 3 mass% or less, when all repeating units (all monomer units) included in the polymer is taken to be 100 mass%, from the perspective of providing further strong bonding between the electrode and other battery members via the adhesive layer.

### [Volume-average particle diameter of particulate polymer A not having core-shell structure]

The volume-average particle diameter (D50) of the particulate polymer A not having a core-shell structure is preferably 400 nm or more, and preferably 1500 nm or less. With the volume-average particle diameter of the particulate polymer A not having a core-shell structure being equal to or greater than the aforementioned lower limit, it is possible to suppress the deterioration of battery characteristics by the resistance increase of a secondary battery due to the blocking of the passing route of lithium ions of the particulate polymer A. With the volume-average particle diameter being equal to or lower than the aforementioned upper limit, it is possible to further suppress the clogging of a nozzle when the composition for adhesive layer is applied by the inkjet method to improve the inkjet discharge characteristics.

Note that the volume-average particle diameter (D50) of the particulate polymer A not having a core-shell structure can be measured using a method described in the EXAMPLES section of the present specification.

The volume-average particle diameter of the particulate polymer A not having a core-shell structure can be adjusted into a desired range by, for example, adjusting the amount of the emulsifier or the amount of the monomer.

### [Method of producing particulate polymer A not having a core-shell structure]

The particulate polymer A not having a core-shell structure can be prepared by performing polymerization of a monomer composition containing the monomers set forth above in an aqueous solvent such as water, for example, without any particular limitations. The proportion of each monomer in the monomer composition is normally the same as the proportion of each monomer unit in the particulate polymer A not having a core-shell structure. The polymerization method and the polymerization reaction are not particularly limited, and publicly known polymerization method and polymerization reaction may be used.

### <Solvent>

In the composition for adhesive layer, examples of the aforementioned solvent in which the particulate polymer A is dispersed include, but are not limited to, water, an organic solvent, and a mixture thereof. Examples of the organic solvent include, but are not limited to, cyclic aliphatic hydrocarbons such as cyclopentane and cyclohexane; aromatic hydrocarbons such as toluene and xylene; ketones such as ethyl methyl ketone and cyclohexanone; esters such as ethyl acetate, butyl acetate, γ-butyrolactone, and ε-caprolactone; nitriles such as acetonitrile and propionitrile; ethers such as tetrahydrofuran and ethylene glycol diethyl ether; and alcohols such as methanol, ethanol, isopropanol, ethylene glycol, propylene glycol, and ethylene glycol monomethyl ether. Of these organic solvents, from the perspective of simplified equipment, water is preferably used. Note that at least part of the aforementioned solvent may be removed by drying, for example, in a production step of the laminate for secondary battery.

### <Solid contents other than particulate polymer A>

The content of solid contents other than the particulate polymer A in the composition for adhesive layer is preferably 10 parts by mass or less, more preferably 5 parts by mass or less, and preferably 0 parts by mass in total 100 parts by mass of the particulate polymer A and the solid contents other than the particulate polymer A, that is, the composition for adhesive layer preferably contains no solid contents other than the particulate polymer A. Examples of solid contents other than the particulate polymer A include, but are not limited to, components such as a surface tension modifier, a dispersant that differs from the dispersant used for polymerization set forth above, a viscosity modifier, a reinforcing material, an additive for electrolyte solution, and a particulate polymer other than the aforementioned particulate polymer A. The solid contents other than the particulate polymer A are not particularly limited as long as they do not affect the battery reaction, and components known in the art, such as those described in WO2012/115096, can be used. One of these solid contents may be used individually, or two or more of these solid contents may be used in combination in a freely selected ratio.

Examples of particulate polymer other than the aforementioned particulate polymer A include a particulate polymer B not having a core-shell structure, which has a glass-transition temperature lower than the glass-transition temperature of the polymer of the core portion in the particulate polymer A.

Examples of the particulate polymer B include fluoropolymers (polymers mainly containing a fluorine-containing monomer unit) such as polyvinylidene fluoride (PVdF); aliphatic conjugated diene/aromatic vinyl copolymers (polymers mainly containing an aromatic vinyl monomer unit and an aliphatic conjugated diene monomer unit) such as a styrene-butadiene copolymer (SBR), and hydrogenated products thereof; aliphatic conjugated diene/acrylonitrile copolymers such as butadiene-acrylonitrile copolymer (NBR), and hydrogenated products thereof; polymers containing a (meth)acrylic acid ester monomer unit (acrylic-based polymers); and polyvinyl alcohol polymers such as polyvinyl alcohol (PVA).

Known monomers can be used as various monomers that may form the aforementioned various monomer units. Monomers similar to the monomers used for preparing the polymer of the core portion in the particulate polymer A can be used as (meth)acrylic acid ester monomers that may form the (meth)acrylic acid ester monomer units.

### <Method of preparing composition for adhesive layer>

The method of preparing a composition for adhesive layer is not particularly limited. For example, the composition for adhesive layer can be prepared by stirring and mixing the particulate polymer A and optional solid contents other than the particulate polymer A in the presence of a solvent. The stirring and mixing method is not particularly limited, and the stirring and mixing can be performed by a known method. Specifically, a common stirring vessel, ball mill, sand mill, bead mill, pigment disperser, ultrasonic disperser, grinding machine, homogenizer, planetary mixer, FILMIX, or the like can be used. The mixing conditions are not particularly limited, but the mixing can be normally performed for 10 minutes or more but a few hours or less at a temperature ranging from room temperature to 80°C.

Thereafter, the composition for adhesive layer, which has been prepared as described above, can be dried to form an adhesive layer.

The adhesive material, which is a dried product of the composition for adhesive layer, can be formed such as to have any shape in plan-view, such as a striped shape, a dotted shape, or a lattice shape without any particular limitations. Of these examples, formation of the adhesive layer in a dotted shape is preferable from a viewpoint of reducing the resistance of the secondary battery. The dotted adhesive layer can be obtained by, for example, the inkjet method.

The amount of the adhesive layer is preferably 0.02 g/m² or more, and preferably 1.0 g/m² or less, and more preferably 0.35 g/m² or less. With the amount of the adhesive layer being equal to or greater than the aforementioned lower limit, it is possible to sufficiently ensure the adhesiveness of the adhesive layer. With the amount of the adhesive layer being equal to or lower than the aforementioned upper limit, it is possible to keep the output characteristics of the secondary battery sufficiently high.

The maximum thickness of the adhesive layer is preferably 2 µm or more. When the maximum thickness of the adhesive layer is 2 µm or more, the adhesiveness of the adhesive layer is further excellent.

Note that "the maximum thickness of the adhesive layer" in the present disclosure means the maximum value of the thickness of the adhesive layer when the adhesive layer is measured by a laser microscope.

The diameter of the dots of the adhesive layer arranged in a dotted pattern is preferably 10 µm or more. When the diameter of the dots of the adhesive layer is 10 µm or more, the adhesiveness of the adhesive layer is further excellent.

The adhesive force of the adhesive layer depends on the method of producing a laminate for secondary battery but is preferably 1.0 N/m or more and 30 N/m or less.

### <Other battery members>

Examples of other battery members that the laminate for secondary battery of the present disclosure may optionally include are not particularly limited but include a separator.

A known separator such as an organic separator can be used as a separator without any particular limitations. The organic separator is a porous member made of an organic material. Examples of an organic separator substrate include fine porous membranes or non-woven fabrics, which contain, for example, a polyolefin resin such as polyethylene or polypropylene or an aromatic polyamide resin. Of these separator substrates, polyethene fine porous membranes or non-woven fabrics are preferable for their good strength. Moreover, from the perspective of ease of handling, a heat-resistant separator obtained by applying ceramic onto the surface is more preferable. The thickness of the separator is not particularly limited but is preferably 3 µm or more and 30 µm or less.

### (Method of producing laminate for non-aqueous secondary batter)

The method of producing the laminate for secondary battery as described above is not particularly limited. The laminate for secondary battery can be produced by, for example, applying the composition for adhesive layer to the electrode and drying it to form an adhesive layer. At this time, the method of applying the composition for adhesive layer is not particularly limited, and a known method such as an inkjet method, a spraying method, a dispensing method, a gravure coating method, a screen printing method, or the like can be used.

The laminate for secondary battery of the present disclosure can be efficiently produced in accordance with the method of producing a laminate for secondary battery of the present disclosure.

The method of producing a laminate for secondary battery of the present disclosure includes a step of forming an adhesive layer using the inkjet method (hereinafter, simply referred to as "step (A)") and may optionally include a step of affixing the electrode and the separator by pressurization at normal temperature via the adhesive layer formed in the step (A) (hereinafter, simply referred to as "step (B)") and a step (C) of cutting an affixed body obtained through the step (B) (hereinafter, simply referred to as "step (C)").

The electrode, the composition for adhesive layer, and the separator used in the method of producing a laminate for secondary battery of the present disclosure will not be described below because they can be those exemplified in the above section of Laminate for secondary battery of the present disclosure.

### <Step (A)>

In the step (A), the composition for adhesive layer is applied to the affixing surface (i.e., a surface on which the adhesive layer is formed) of at least one of the electrode or the separator by the inkjet method. From the perspective of ease of drying the composition for adhesive layer, the composition for adhesive layer is preferably applied onto the electrode. At this time, the conditions of the inkjet method are not particularly limited so long as the composition for adhesive layer can be supplied into a dot shape. The conditions can be adjusted as appropriate depending on the desired properties of the resulting adhesive layer. When the composition for adhesive layer is applied, a larger amount of the composition for adhesive layer that remains on the electrode and/or the separator can more decrease the output of the secondary battery.

Thereafter, the electrode and the separator are conveyed to an affixing start position without bringing another member into contact with the affixing surface onto which the composition for adhesive layer has been applied, while the composition for adhesive layer is dried during the conveyance. By not bringing another member into contact with the affixing surface onto which the composition for adhesive layer has been applied, problems such as blocking do not occur, which makes it possible to efficiently produce the laminate for secondary battery.

The conveying of the electrode and the separator can be performed using any conveying mechanism such as a roller, a belt conveyor, a manipulator, or a suction band, for example, without any particular limitations. Of these examples, it is preferable that at least one of the electrode and the separator is conveyed using a roller from a viewpoint of further increasing the production efficiency of the laminate for secondary battery.

The drying of the composition for secondary battery adhesive layer can be performed using any heating device such as a heater, a dryer, or a heating roller without any particular limitations. The temperature during the drying of the electrode and/or separator to which the composition for secondary battery adhesive layer has been applied is not particularly limited but is preferably 50°C or more and 90°C or less. The drying time is not particularly limited but is preferably 1 second or more and 120 seconds or less.

### <Step (B)>

In the step (B), the electrode and the separator are affixed to each other via the affixing surfaces. This affixing can be performed through pressurization of a laminate in which the electrode and the separator are stacked via the affixing surfaces, at normal temperature.

The pressure applied when pressurizing the laminate can be adjusted as appropriate depending on the type and amount of the particulate polymer A to be used but is preferably more than 1 MPa and 5 MPa or less.

### <Step (C)>

The step (C) is a step of cutting the affixed body obtained in the affixing step to desired dimensions. The cutting can be performed using any cutting machine that can be used in the field of production of secondary batteries, such as a cutting machine that cuts the affixed body from both sides in the thickness direction thereof by sandwiching the affixed body with cutting edges, for example.

### (Non-aqueous secondary battery)

The secondary battery of the present disclosure includes a laminate for secondary battery of the present disclosure. The secondary battery of the present disclosure includes a laminate for secondary battery of the present disclosure, thus having excellent battery characteristics such as output characteristics. The method of producing a non-aqueous secondary battery of the present disclosure is not particularly limited. In an example, when a secondary battery is produced using the laminate for secondary battery of the present disclosure, a step of assembling a secondary battery using the laminate for secondary battery and an electrolyte solution (assembly step) is performed.

### <Assembly step>

An organic electrolyte solution obtained by dissolving a supporting electrolyte in an organic solvent is normally used as an electrolyte solution. For example, when the secondary battery is a lithium ion secondary battery, lithium salt is used as a supporting electrolyte. Examples of lithium salt include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable and LiPF₆ is particularly preferable as these lithium salts readily dissolve in a solvent and exhibit a high degree of dissociation. One of these electrolytes may be used individually, or two or more of these electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte.

Furthermore, the organic solvent used in the electrolyte solution is not particularly limited so long as the supporting electrolyte can dissolve therein. Examples of suitable organic solvents include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of these solvents may be used. Of these solvents, carbonates are preferable due to having high permittivity and a wide stable potential region. In general, lithium ion conductivity tends to increase when a viscosity of the solvent to be used is low. Therefore, lithium ion conductivity can be adjusted through the type of solvent.

The concentration of the electrolyte in the electrolyte solution can be adjusted as appropriate. Moreover, a known additive may be added to the electrolyte solution.

The secondary battery can be assembled by further stacking an additional battery member (electrode and/or separator, etc.) on the laminate for secondary battery of the present disclosure as necessary, then rolling or folding a resulting laminate in accordance with the battery shape as necessary to place the laminate in a battery container, filling the battery container with the electrolyte solution, and sealing the battery container. An overcurrent preventing device such as a fuse or a PTC device; an expanded metal; or a lead plate may be provided in the secondary battery as necessary in order to prevent inside pressure increase and occurrence of overcharging or overdischarging. The shape of the secondary battery may be a coin type, a button type, a sheet type, a cylinder type, a prismatic type, a flat type, or the like.

### EXAMPLES

The following provides a more specific description of the present disclosure based on Examples. However, the present disclosure is not limited to Examples given below. In the following description, "%" and "part" used in expressing quantities are by mass unless otherwise specified.

Moreover, in the case of a polymer that is produced through copolymerization of a plurality of types of monomers, the proportion constituted by a monomer unit that is formed through polymerization of a given monomer in the polymer is normally, unless otherwise specified, the same as the ratio (charging ratio) of the given monomer among all monomers used in polymerization of the polymer.

Various measurements and evaluations in each of Examples and Comparative Examples were performed by the following method.

### <Glass-transition temperature>

The water dispersion of the particulate polymer A prepared in each of Production Examples and the water dispersion of the particulate polymer B prepared in Example 3 were each dried under a temperature of 130°C for 1 hour to make a sample. A differential scanning calorimetry (DSC) curve was measured by weighing 10 mg of the measurement sample into an aluminum pan and then performing measurement thereof under conditions prescribed by JIS Z8703 with a measurement temperature range of -100°C to 500°C and a heating rate of 10°C/min, using a differential scanning calorimeter ("EXSTAR DSC6220" produced by SII NanoTechnology Inc.). An empty aluminum pan was used as a reference. In the heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as a glass-transition temperature (°C).

### <Volume-average particle diameter>

The volume-average particle diameter of the particulate polymer A prepared in each of Production Examples, the volume-average particle diameter of the particulate polymer B prepared in Example 3, and the volume-average particle diameter of the composition for adhesive layer prepared in each of Examples and Comparative Examples were each measured by laser diffraction.

Specifically, a water dispersion solution containing the particulate polymer A prepared in each of Production Examples (solid content concentration: 0.1 mass%), a water dispersion solution containing the particulate polymer B prepared in Example 3 (solid content concentration: 0.1 mass%), and the composition for adhesive layer prepared in each of Examples and Comparative Examples were each used as a sample. A volume-average particle diameter (D10) of the particulate polymer, a volume-average particle diameter (D10) of the particulate polymer B, and a volume-average particle diameter (D10) of the composition for adhesive layer were each taken to be a particle diameter at which a cumulative volume calculated from a small diameter end reached 10% in a volume-basis particle size distribution obtained by a laser diffraction particle size analyzer (produced by Beckman Coulter, Inc.; product name: "LS-13 320") in each sample. A volume-average particle diameter (D50) of the particulate polymer A, a volume-average particle diameter (D50) of the particulate polymer B, and a volume-average particle diameter (D50) of the composition for adhesive layer were each taken to be a particle diameter at which a cumulative volume calculated from a small diameter end reached 50% in the above-described particle size distribution.

### <Surface roughness (Sa)>

Any region with a 500 µm square on the surface of the negative electrode used in each of Examples and Comparative Examples was measured using a laser displacement microscope (produced by Keyence Corporation; product name: VK-X1000) to calculate an arithmetic mean height. The same measurement was performed at the total 10 locations in the negative electrode, and an average of the resulting arithmetic mean heights was taken to be a surface roughness (Sa) of the negative electrode.

### <Dot diameter of adhesive layer>

Under the same conditions as those in each of Examples and Comparative Examples, the composition for adhesive layer was applied to the negative electrode and then dried at 90°C to form a dotted adhesive layer. The diameter of the dotted adhesive layer measured using a laser microscope was taken to be a dot diameter of the adhesive layer.

### <Inkjet discharge characteristics>

Discharge test was performed on the composition for adhesive layer prepared in each of Examples and Comparative Examples, using a discharge experiment kit with high performance head (IJK-200S; produced by MICROJET Corporation). Then, discharge characteristics were evaluated by the following standard:
A: Discharge is possible, and re-discharge is also possible even after a standing time of 5 minutes or more; and
B: Discharge is possible, but re-discharge is impossible after a standing time of 5 minutes.

### <Adhesiveness between electrode and separator>

Under the same conditions as those in each of Examples and Comparative Examples, a negative electrode with one surface on which the composition for adhesive layer had been applied and a separator were pressed for 10 seconds under pressing conditions of a temperature of 25°C and a pressure of 2 MPa and affixed to each other. The resulting laminate (i.e., laminate obtained by affixing one negative electrode and one separator to each other via the adhesive layer) was taken to be a test specimen.

The test specimen was placed with the surface at the current collector-side of the negative electrode facing downward, and cellophane tape was attached to the surface at the current collector-side of the negative electrode. Tape prescribed by JIS Z1522 was used as the cellophane tape. The cellophane tape had been affixed to a horizontal test stage beforehand. One end of the separator was pulled vertically upward at a pulling rate of 50 mm/min and the stress when the separator was peeled off was measured.

This measurement was made 6 times. An average value for the stress was determined as the peel strength, and the adhesiveness (dry adhesiveness) between the negative electrode and the separator was evaluated by the following standard. A larger peel strength indicates a higher adhesiveness between the electrode (negative electrode) and the separator:
A: Peel strength of 5.0 N/m or more;
B: Peel strength of 2.0 N/m or more and less than 5.0 N/m; and
C: Peel strength of 1.0 N/m or more and less than 2.0 N/m.

### <Cycle characteristics>

A lithium ion secondary battery produced in each of Examples and Comparative Examples was left at rest at a temperature of 25°C for 5 hours after injection of the electrolyte solution. Next, the secondary battery was charged to a cell voltage of 3.65 V by a 0.2C constant-current method at a temperature of 25°C and was then subjected to 12 hours of aging at a temperature of 60°C. The secondary battery was then discharged to a cell voltage of 3.00 V by a 0.2C constant-current method at a temperature of 25°C. Thereafter, the secondary battery was CC-CV charged (upper limit cell voltage: 4.30 V) by a 0.2C constant-current method and was CC discharged to 3.00 V by a 0.2C constant-current method.

The secondary battery was subsequently subjected to 100 cycles of a charge/discharge operation between cell voltages of 4.30 V and 3.00 V at a charge/discharge rate of 1.0C in an environment having a temperature of 25°C. The capacity of the 1st cycle (i.e., the initial discharge capacity X1) and the discharge capacity X2 of the 100th cycle were measured, and a capacity maintenance rate (%) = (X2/X1) × 100 was calculated and was evaluated by the following standard. A larger value for the capacity maintenance rate indicates better cycle characteristics of the secondary battery:
A: Capacity maintenance rate of 90% or more;
B: Capacity maintenance rate of 85% or more and less than 90%; and
C: Capacity maintenance rate of 80% or more and less than 85%.

### <Output characteristics>

A lithium ion secondary battery produced in each of Examples and Comparative Examples was constant-current constant-voltage (CCCV) charged to 4.3 V in an atmosphere having a temperature of 25°C to prepare a cell. Thereafter, the electric capacities when the prepared cell was discharged to 3.0 V by 0.2C and 1C constant-current methods in an atmosphere having a temperature of -10°C were determined. A discharge capacity maintenance rate expressed by the ratio of the electric capacities (= (electric capacity at 1C/electric capacity at 0.2C) × 100 (%)) was determined. These measurements were performed on five secondary battery cells and the average value of the determined discharge capacity maintenance rates was evaluated by the following standard as output characteristics. A larger value indicates better output characteristics:
A: Average value of discharge capacity maintenance rates of 80% or more;
B: Average value of discharge capacity maintenance rates of 70% or more and less than 80%; and
C: Average value of discharge capacity maintenance rates of 60% or more and less than 70%.

### (Production Example 1)

### <Production of particulate polymer 1>

A reactor equipped with a stirrer was supplied with 100 parts of deionized water and 0.1 parts of ammonium persulfate. The gas phase was purged with nitrogen gas and the temperature was raised to 80°C. On the other hand, 40 parts of deionized water, 0.2 parts of sodium dodecylbenzenesulfonate as an emulsifier, 91.1 parts of butyl acrylate as a (meth)acrylic acid ester monomer, 1.9 parts of acrylonitrile as a (meth)acrylonitrile monomer, 1.9 parts of methacrylic acid as an acid group-containing monomer, and 0.1 parts of ethylene glycol dimethacrylate as a cross-linkable monomer are mixed in another vessel to obtain a monomer composition for core portion formation 1. This monomer composition for core portion formation 1 was continuously added to the reactor over a period of 3 hours to perform polymerization reaction at a temperature of 80°C. Polymerization was continued until the polymerization conversion rate reached 95% to obtain a water dispersion containing a polymerized product of a particulate polymer forming a core portion. Next, this water dispersion was continuously supplied with a monomer composition for shell portion formation 1 containing 3.25 parts of styrene as an aromatic vinyl monomer, 1.63 parts of butyl acrylate as a (meth)acrylic acid ester monomer, and 0.12 parts of methacrylic acid as an acid group-containing monomer, over a period of 60 minutes, to continue the polymerization. Once the polymerization conversion rate reached 98%, the reaction was terminated by cooling to prepare a water dispersion containing a particulate polymer 1 (particulate polymer A).

The glass-transition temperature and the volume-average particle diameter of the particulate polymer 1 were measured using the resulting water dispersion. The results are presented in Table 1.

Moreover, by observing a cross-sectional structure of the particulate polymer 1 using a transmission electron microscope (TEM), it was confirmed that the particulate polymer 1 had a core-shell structure in which the shell portion partially covers the outer surface of the core portion.

### (Production Example 2)

### <Production of particulate polymer 2>

A monomer composition for core portion formation 2 containing 40 parts of deionized water, 0.2 parts of sodium dodecylbenzenesulfonate as an emulsifier, 64.6 parts of 2-ethylhexyl acrylate as a (meth)acrylic acid ester monomer, 27.3 parts of styrene as an aromatic vinyl monomer, 3 parts of methacrylic acid as an acid group-containing monomer, and 0.1 parts of ethylene glycol dimethacrylate as a cross-linkable monomer was used instead of the monomer composition for core portion formation 1 in Production Example 1. Except for the foregoing, a water dispersion of a particulate polymer 2 (particulate polymer A) having a core-shell structure was prepared as in Production Example 1.

Various measurements were performed as in Production Example 1 using the resulting water dispersion. The results are presented in Table 1.

### (Production Example 3)

### <Production of particulate polymer 3>

A water dispersion of a particulate polymer 3 (particulate polymer A) having a core-shell structure was prepared in the same way as in Production Example 2, except for changing the amount of 2-ethylhexyl acrylate as a (meth)acrylic acid ester monomer to 48 parts and the amount of styrene as an aromatic vinyl monomer to 43.9 parts in the monomer composition for core portion formation 2 in Production Example 2.

Various measurements were performed as in Production Example 1 using the resulting water dispersion. The results are presented in Table 1.

### (Production Example 4)

### <Production of particulate polymer 4>

A monomer composition for core portion formation 4 containing 40 parts of deionized water, 0.2 parts of sodium dodecylbenzenesulfonate as an emulsifier, 81.5 parts of butyl acrylate as a (meth)acrylic acid ester monomer, 1.7 parts of acrylonitrile as a (meth)acrylonitrile monomer, 1.7 parts of methacrylic acid as an acid group-containing monomer, and 0.1 parts of ethylene glycol dimethacrylate as a cross-linkable monomer was used instead of the monomer composition for core portion formation 1. In addition, a monomer composition for shell portion formation 4 containing 9.74 parts of styrene as an aromatic vinyl monomer, 4.88 parts of butyl acrylate as a (meth)acrylic acid ester monomer, and 0.38 parts of methacrylic acid as an acid group-containing monomer was used instead of the monomer composition for shell portion formation 1. Except for the foregoing, a water dispersion of a particulate polymer 4 (particulate polymer A) having a core-shell structure was prepared as in Production Example 1.

Various measurements were performed as in Production Example 1 using the resulting water dispersion. The results are presented in Table 1.

### (Production Example 5)

### <Production of particulate polymer 5>

A reactor equipped with a stirrer was supplied with 90 parts of deionized water and 0.5 parts of ammonium persulfate. The gas phase was purged with nitrogen gas and the temperature was raised to 80°C. On the other hand, 15 parts of deionized water, 1.0 parts of NEOPELEX G15 (produced by Kao Corporation) as an emulsifier, 95.9 parts of butyl acrylate as a

(meth)acrylic acid ester monomer, 2.0 parts of acrylonitrile as a (meth)acrylonitrile monomer, 2.0 parts of methacrylic acid as an acid group-containing monomer, and 0.1 parts of ethylene glycol dimethacrylate as a (meth)acrylic acid ester monomer are mixed in another vessel to obtain a monomer composition 5.

This monomer composition 5 was continuously added to the reactor over a period of 4 hours to perform polymerization reaction. The reaction was performed at a temperature of 80°C during the continuous addition. After the end of the continuous addition, stirring was further performed at a temperature of 80°C for 3 hours to end the reaction.

After the resulting water dispersion was cooled to a temperature of 25°C, the pH was adjusted to 8.0 through addition of a sodium hydroxide aqueous solution. Thereafter, steam was introduced to remove unreacted monomers, and a water dispersion of a particulate polymer 5 (particulate polymer A) not having a core-shell structure was prepared.

Various measurements were performed as in Production Example 1 using the resulting water dispersion. The results are presented in Table 1.

### (Production Example 6)

### <Production of particulate polymer 6>

A monomer composition for shell portion formation 6 containing 3.00 parts of styrene as an aromatic vinyl monomer, 1.87 parts of butyl acrylate as a (meth)acrylic acid ester monomer, and 0.13 parts of methacrylic acid as an acid group-containing monomer was used instead of the monomer composition for shell portion formation 1. Except for the foregoing, a water dispersion of a particulate polymer 6 (particulate polymer A) having a core-shell structure was prepared as in Production Example 1.

Various measurements were performed as in Production Example 1 using the resulting water dispersion. The results are presented in Table 1.

### (Production Example 7)

### <Production of particulate polymer 7>

A water dispersion of a particulate polymer 7 (particulate polymer A) having a core-shell structure was prepared as in Production Example 1, except for continuously adding the monomer composition for core portion formation 1 to the reactor over a period of 1 hour.

Various measurements were performed as in Production Example 1 using the resulting water dispersion. The results are presented in Table 1.

### (Example 1)

### <Preparation of composition for adhesive layer>

Deionized water was added to the water dispersion of the particulate polymer 1 as a particulate polymer A to dilute the mixture to have a solid content concentration of 10.5%. Propylene glycol was further added to the resulting mixture to adjust the solid content concentration to 10%, thus obtaining a composition for adhesive layer.

The dot diameter of the adhesive layer, the inkjet discharge characteristics, and the adhesiveness between the electrode and the separator were measured and evaluated using the resulting composition for adhesive layer. The results are presented in Table 1.

### <Production of negative electrode web>

A 5 MPa pressure vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. The contents of the pressure vessel were sufficiently stirred and were then heated to 50°C to initiate polymerization. Once the polymerization conversion rate reached 96%, the reaction was terminated by cooling to obtain a mixture containing a binder for negative electrode mixed material layer (SBR). The aforementioned mixture containing the binder for negative electrode mixed material layer was adjusted to pH 8 through addition of 5% sodium hydroxide aqueous solution, and then unreacted monomer was removed by thermal-vacuum distillation. Thereafter, the mixture was cooled to 30°C or less to obtain a water dispersion containing the desired binder for negative electrode mixed material layer.

Next, 100 parts of artificial graphite (volume-average particle diameter: 15.6 µm) as a negative electrode active material, 1 part in terms of solid content of a 2% aqueous solution of a sodium salt of carboxymethyl cellulose (produced by Nippon Paper Industries Co., Ltd., product name: "MAC350HC") as a viscosity modifier, and deionized water were mixed and adjusted to have a solid content concentration of 68%, and then these materials were further mixed for 60 minutes at a temperature of 25°C. Deionized water was further used to adjust the solid content concentration to 62%, and further mixing was then performed for 15 minutes at a temperature of 25°C. 1.5 parts in terms of solid content of the aforementioned water dispersion containing the binder for negative electrode mixed material layer, and deionized water were added to the resulting mixed solution, the final solid content concentration was adjusted to 52%, and a further 10 minutes of mixing was performed. The resulting mixture was subjected to a defoaming process under reduced pressure to obtain a slurry composition for secondary battery negative electrode having good fluidity.

A comma coater was used to apply the obtained slurry composition for secondary battery negative electrode onto both surfaces of copper foil (current collector) of 20 µm in thickness such as to have a thickness of approximately 150 µm after drying. The applied slurry composition was dried by conveying the copper foil inside an oven at a temperature of 60°C for 2 minutes at a rate of 0.5 m/min. Thereafter, heat treatment was performed for 2 minutes at a temperature of 120°C to obtain a pre-pressing negative electrode web. The pre-pressing negative electrode web was rolled by roll pressing to obtain a post-pressing negative electrode web including a negative electrode mixed material layer of 80 µm in thickness.

A surface roughness (Sa) of the electrode (negative electrode) was determined using the obtained negative electrode web. The results are presented in Table 1

### <Production of positive electrode web>

100 parts of LiCoO₂ having a volume-average particle diameter of 12 µm as a positive electrode active material, 2 parts of acetylene black (produced by Denka Company Limited; product name: "HS-100") as a conductive material, 2 parts in terms of solid content of polyvinylidene fluoride (produced by KUREHA Corporation; product name: "#7208") as a binder, and N-methylpyrrolidone as a solvent were mixed to have a total solid content concentration of 70%. These materials were mixed with a planetary mixer to obtain a slurry composition for secondary battery positive electrode.

A comma coater was used to apply the obtained slurry composition for secondary battery positive electrode onto both surfaces of aluminum foil (current collector) of 20 µm in thickness such as to have a thickness of approximately 150 µm after drying. The applied slurry composition was dried by conveying the aluminum foil inside an oven at a temperature of 60°C for 2 minutes at a rate of 0.5 m/min. Thereafter, heat treatment was performed for 2 minutes at a temperature of 120°C to obtain a positive electrode web.

Then, the obtained positive electrode web was rolled using a roll pressing machine to obtain a post-pressing positive electrode web including a positive electrode mixed material layer.

### <Preparation of separator web>

A polyethylene (PE) separator web (produced by Asahi Kasei Corp.; product name: "ND412") was prepared.

### <Production of laminate for secondary battery>

A laminate for secondary battery was produced as illustrated in FIG. 1, using the produced composition for adhesive layer, negative electrode web, positive electrode web, and separator web. In FIG. 1, a reference numeral 91 indicates a conveying roller, and a reference numeral 92 indicates a heating roller.

Specifically, while conveying a negative electrode web 20A fed out from a web roll at a rate of 10 m/min, the composition for adhesive layer was supplied onto one surface of the negative electrode web 20A from an inkjet head of an ink-jet coater 52 (produced by Konica, KM1024 (shear-mode type)), and a second separator web 30A fed out from a separator web roll and the negative electrode web 20A were then affixed to each other with pressure bonding rollers 61 and 62. Moreover, the composition for adhesive layer was supplied onto the other surface of the negative electrode web 20A from an inkjet head of an ink-jet coater 51 (produced by Konica, KM1024 (shear-mode type)), and a first separator web 10A fed out from a separator web roll and the laminate of the negative electrode web 20A and the second separator web 30A were then affixed to each other with pressure bonding rollers 61 and 62. Furthermore, the composition for adhesive layer was supplied onto a surface opposite to the negative electrode web 20A side of the first separator web 10A from an inkjet head of an ink-jet coater 53 (produced by Konica, KM1024 (shear-mode type)), a preliminarily cut positive electrode 40 was placed, and the laminate of the first separator web 10A, the negative electrode web 20A, and the second separator web 30A, and the positive electrode 40 were then affixed to each other with pressure bonding rollers 61 and 62. Then, after the composition for adhesive layer was supplied to the positive electrode 40 from an inkjet head of an ink-jet coater 54 (produced by Konica, KM1024 (shear-mode type)), the affixed body was cut with a cutting machine 70 to obtain a laminate formed by laminating a second separator, a negative electrode, a first separator, and a positive electrode in this order. At the end of each current collector of the positive electrode 40 and the negative electrode web 20, a part on which the electrode mixed material layer (positive electrode mixed material layer or negative electrode mixed material layer) is not formed is provided. The part has been preliminarily punched to form a tab with a desired size. The laminating was performed so that a positive electrode tab and a negative electrode tab were disposed on the same end edge side of affixing surfaces X and Y of the electrode and the separator.

The affixing using the pressure bonding rollers 61 and 62 was performed at a temperature of 25°C and a pressure of 2 MPa.

Furthermore, the supplied composition for adhesive layer was dried using the heating rollers 92 as parts of the conveying rollers 91. At this time, the dry temperature was 90°C, and the drying time was 1 second.

### <Production of secondary battery>

Five laminates for secondary battery obtained as described above were stacked and pressed at a temperature of 70°C and a pressure of 1 MPa for 10 seconds to produce a stacked body. The stacked body was enclosed in an aluminum packing case serving as a case, and an electrolyte solution (solvent: ethylene carbonate/diethyl carbonate/vinylene carbonate = 68.5/30/1.5 (volume ratio); electrolyte: LiPF₆ of 1 M in concentration) was injected. An opening of the aluminum packing case was subsequently closed by heat sealing at a temperature of 150°C to produce a stacked lithium ion secondary battery having a capacity of 800 mAh. The cycle characteristics and the output characteristics of the obtained secondary battery were evaluated. The results are presented in Table 1.

### (Examples 2, 4, and 6)

A composition for adhesive layer, a negative electrode web, a positive electrode web, a separator web, a laminate for secondary battery, and a secondary battery were each produced and prepared in the same way as in Example 1, except for using the water dispersion of the particulate polymer 2 (Example 2), the water dispersion of the particulate polymer 4 (Example 4), or the water dispersion of the particulate polymer 6 (Example 6), instead of the water dispersion of the particulate polymer 1 as a particulate polymer A.

Then, various measurements and evaluations were performed as in Example 1. The results are presented in Table 1.

### (Example 3)

### <Production of particulate polymer B>

A reactor equipped with a stirrer was supplied with 90 parts of deionized water and 0.5 parts of ammonium persulfate. The gas phase was purged with nitrogen gas and the temperature was raised to 80°C. On the other hand, 15 parts of deionized water, 1.0 parts of NEOPELEX G15 (produced by Kao Corporation) as an emulsifier, 70 parts of 2-ethylhexyl acrylate as a (meth)acrylic acid ester monomer, 25 parts of styrene as an aromatic vinyl monomer, 3 parts of acrylic acid as an acid group-containing monomer, 1.7 parts of allyl glycidyl ether as an epoxy group-containing ethylenically unsaturated monomer, and 0.3 parts of allyl methacrylate as a divinyl monomer were mixed in another vessel to obtain a composition for particulate polymer B.

This composition for particulate polymer B was continuously added to the reactor over a period of 4 hours to perform polymerization. The reaction was performed at a temperature of 80°C during the continuous addition. After the end of the continuous addition, stirring was further performed at a temperature of 80°C for 3 hours to end the reaction.

After the resulting water dispersion was cooled to a temperature of 25°C, the pH was adjusted to 8.0 through addition of a sodium hydroxide aqueous solution. Thereafter, steam was introduced to remove unreacted monomers, and a water dispersion of the particulate polymer B was obtained.

The glass-transition temperature and the volume-average particle diameter of the particulate polymer B were determined using the obtained water dispersion. The results are presented in Table 1.

### <Preparation of composition for adhesive layer>

The water dispersion of the particulate polymer 3 as a particulate polymer A and the water dispersion of the particulate polymer B (solid contents other than the particulate polymer A) obtained as described above were mixed so that the mass ratio of solid contents (particulate polymer 3 : particulate polymer B) was 95:5. Furthermore, deionized water was added to dilute the resulting mixture to have a solid content concentration of 10.5%. Propylene glycol was further added to the resulting mixture to adjust the solid content concentration to 10%, thus obtaining a composition for adhesive layer 3.

Then, a negative electrode web, a positive electrode web, a separator web, a laminate, and a secondary battery were produced and prepared in the same way as in Example 1, except for using the composition for adhesive layer 3, instead of the composition for adhesive layer 1. Then, various measurements and evaluations were performed as in Example 1. The results are presented in Table 1.

### (Example 5)

A composition for adhesive layer 5 was prepared in the same way as in Example 1, except for using the water dispersion of the particulate polymer 5, instead of the water dispersion of the particulate polymer 1 as a particulate polymer A.

A laminate for secondary battery and a secondary battery were produced in the same way as in Example 1, except for applying the obtained composition for adhesive layer 5 to the entire surface of the negative electrode web by the gravure method. Then, various measurements and evaluations were performed as in Example 1. The results are presented in Table 1.

### (Comparative Example 1)

A composition for adhesive layer, a negative electrode web, a positive electrode web, a separator web, a laminate for secondary battery, and a secondary battery were produced and prepared in the same way as in Example 1, except for using the water dispersion of the particulate polymer 7, instead of the water dispersion of the particulate polymer 1 as a particulate polymer A.

Then, various measurements and evaluations were performed as in Example 1. The results are presented in Table 1.

### (Comparative Example 2)

The water dispersion of the particulate polymer 3 as a particulate polymer A and the water dispersion of the particulate polymer B obtained in Example 3 were mixed so that the mass ratio of solid contents (particulate polymer 3 : particulate polymer B) was 85:15. Furthermore, deionized water was added to dilute the resulting mixture to have a solid content concentration of 10.5%. Propylene glycol was further added to the resulting mixture to adjust the solid content concentration to 10%, thus obtaining a composition for adhesive layer 8.

Then, a negative electrode web, a positive electrode web, a separator web, a laminate for secondary battery, and a secondary battery were produced and prepared in the same way as in Example 1, except for using the composition for adhesive layer 8, instead of the composition for adhesive layer 1. Then, various measurements and evaluations were performed as in Example 1. The results are presented in Table 1.

**[Table 1]**

| | | | | Example 1 | Example 2 | Example 3 | Example 4 | Example 5 | Example 6 | Comparative Example 1 | Comparative Example 2 |
|---|---|---|---|---|---|---|---|---|---|---|---|
| | | Composition of core portion | BA | 91.1 | - | - | 81.5 | 95.9 | 91.1 | 91.1 | - |
| | | | AN | 1.9 | - | - | 1.7 | 2.0 | 1.9 | 1.9 | - |
| | | | 2EHA | - | 64.6 | 48 | - | - | - | - | 48 |
| | | | St | - | 27.3 | 43.9 | - | - | - | - | 43.9 |
| | | | MAA | 1.9 | 3 | 3 | 1.7 | 2.0 | 1.9 | 1.9 | 3 |
| | | | EDMA | 0.1 | 0.1 | 0.1 | 0.1 | 0.1 | 0.1 | 0.1 | 0.1 |
| | | Composition of shell portion | St | 3.25 | 3.25 | 3.25 | 9.74 | - | 3.00 | 3.25 | 3.25 |
| | Particulate polymer A | | BA | 1.63 | 1.63 | 1.63 | 4.88 | - | 1.87 | 1.63 | 1.63 |
| | | | MAA | 0.12 | 0.12 | 0.12 | 0.38 | - | 0.13 | 0.12 | 0.12 |
| | | Mss ratio (core portion/shell | portion) | 95/5 | 95/5 | 95/5 | 85/15 | - | 95/5 | 95/5 | 95/5 |
| | | Glass-transition temperature (Tg) [°C] | Core portion | -40 | -18 | 5 | -40 | -40 | -40 | -40 | 35 |
| | | | Shell portion | 53 | 53 | 53 | 53 | - | 40 | 53 | 53 |
| Composition for adhesive layer | | Volume-average particle diameter D10 [nm] | | 670 | 560 | 640 | 690 | 660 | 670 | 450 | 640 |
| | | Volume-average particle diameter D50 [nm] | | 790 | 700 | 750 | 810 | 780 | 790 | 700 | 750 |
| | Particulate polymer B | Composition | 2EHA | - | - | 70 | - | - | - | - | 70 |
| | | | St | - | - | 25 | - | - | - | - | 25 |
| | | | AA | - | - | 3 | - | - | - | - | 3 |
| | | | AGE | - | - | 1.7 | - | - | - | - | 1.7 |
| | | | AMA | - | - | 0.3 | - | - | - | - | 0.3 |
| | | Glass-transition temperature (Tg) [°C] | | - | - | -25 | - | - | - | - | -25 |
| | | Volume-average particle diameter D10 [nm] | | - | - | 170 | - | - | - | - | 170 |
| | | Volume-average particle diameter D50 [nm] | | - | - | 200 | - | - | - | - | 200 |
| | Volume-average particle diameter D10 [mn] | | | 670 | 560 | 570 | 690 | 660 | 670 | 450 | 210 |
| | Volume-average particle diameter D50 [nm] | | | 790 | 700 | 670 | 810 | 780 | 790 | 700 | 600 |
| | Mass ratio of solid contents (particulate polymer A : particulate polymer B) | | | 100:0 | 100:0 | 95:5 | 100:0 | 100:0 | 100:0 | 100:0 | 85:15 |
| Electrode | Type | | | Negative electrode | Negative electrode | Negative electrode | Negative electrode | Negative electrode | Negative electrode | Negative electrode | Negative electrode |
| | Surface roughness (Sa) [nm] | | | 500 | 500 | 500 | 500 | 500 | 500 | 500 | 500 |
| Supply conditions | Supply method | | | Inkjet | Inkjet | Inkjet | Inkjet | Gravure | Inkjet | Inkjet | Inkjet |
| | Supply pattern | | | Dot | Dot | Dot | Dot | Entire surface | Dot | Dot | Dot |
| Adhesive laver | Dot diameter [µm] | | | 400 | 400 | 400 | 400 | 400 | 400 | 400 | 400 |
| | Dry temperature [°C] | | | 90 | 90 | 90 | 90 | 90 | 90 | 90 | 90 |
| Evaluation | Inkjet discharge characteristics | | | A | A | A | A | - | B | A | B |
| | Adhesiveness between electrode and separator | | | A | B | B | B | A | A | C | C |
| | Cycle characteristics | | | A | A | B | B | A | A | C | C |
| | Output characteristics | | | A | A | B | A | A | A | C | C |

In Table 1,
"BA" indicates butyl acrylate,
"AN" indicates acrylonitrile,
"2EHA" indicates 2-ethylhexyl acrylate,
"St" indicates styrene,
"MAA" indicates methacrylic acid,
"EDMA" indicates ethylene glycol dimethacrylate,
"AA" indicates acrylic acid,
"AGE" indicates allyl glycidyl ether, and
"AMA" indicates allyl methacrylate.

From Table 1, it is found that, in the laminate for secondary battery obtained in each of Examples 1 to 6, the electrode and the separator are strongly bonded to each other, and the secondary battery including such a laminate for secondary battery has excellent cycle characteristics and output characteristics.

### INDUSTRIAL APPLICABILITY

According to the present disclosure, it is possible to provide a laminate for non-aqueous secondary battery, which has excellent adhesiveness and can allow a non-aqueous secondary battery to exert excellent output characteristics.

According to the present disclosure, it is also possible to provide a method of efficiently producing a laminate for non-aqueous secondary battery, which has excellent adhesiveness and can allow a non-aqueous secondary battery to exert excellent output characteristics.

According to the present disclosure, it is further possible to provide a secondary battery having excellent battery characteristics such as output characteristics.

### REFERENCE SIGNS LIST

- 10A: first separator web
- 20A: negative electrode web
- 30A: second separator web
- 40: positive electrode
- 51 to 54: coater
- 61, 62: pressure bonding roller
- 70: cutting machine
- 91: conveying roller
- 92: heating roller

## Claims

1. A laminate for non-aqueous secondary battery, comprising at least an electrode and an adhesive layer disposed on the electrode, wherein
the adhesive layer is a dried product of a composition for adhesive layer containing at least a particulate polymer A, and
the composition for adhesive layer has a particle diameter (D10) at which a cumulative volume calculated from a small diameter end of a volume-basis particle diameter distribution reaches 10%, the particle diameter (D10) being larger than a surface roughness (Sa) of the electrode.

2. The laminate for non-aqueous secondary battery according to claim 1, wherein a mass proportion constituted by a polymer having a glass-transition temperature (Tg) of 0°C or less is the highest in all polymers that form the particulate polymer A.

3. The laminate for non-aqueous secondary battery according to claim 1, wherein the particulate polymer A has a core-shell structure including a core portion and a shell portion that covers an outer surface of the core portion.

4. The laminate for non-aqueous secondary battery according to claim 3, wherein the shell portion has a polymer having a glass-transition temperature (Tg) exceeding 50°C.

5. A method of producing the laminate for non-aqueous secondary battery according to any one of claims 1 to 4, the method comprising
forming the adhesive layer using an inkjet method.

6. A non-aqueous secondary battery, comprising the laminate for non-aqueous secondary battery according to any one of claims 1 to 4.
